# EUROPEAN PATENT APPLICATION

(11) **EP 0 534 557 A1**
(43) Date of publication of application: **31.03.1993**
(21) Application number: 92202922.8
(22) Date of filing: 23.09.1992
(51) Int. Cl.: G07B 13/04, B60N 2/44

(54) **Vehicle with seating indicator**

(30) Priority: 23.09.1991 NL 9101597
(71) Applicant: TAXIBEDRIJF A. URBAN, NL-3941 DK Doorn (NL)
(72) Inventor: Urban, Alex, NL-3941 DK Doorn (NL)
(74) Representative: Land, Addick Adrianus Gosling

(57) **Abstract**

It is of particular importance in the case of taxis to record how many passengers are transported on a journey, since in specific types of taxi transport people with different destinations occupy a place in the vehicle and pay for their journey individually.

The present invention provides a vehicle provided with seats for one or more occupants wherein in one or more seats is arranged a gastight bag-like member filled with medium in order to provide a seating indicator which indicates whether or not a person has occupied this seat.

## Description

It is of particular importance in the case of taxis to record how many passengers are transported on a journey, since in specific types of taxi transport people with different destinations occupy a place in the vehicle and pay for their journey individually.

Known seating indicators usually comprise capacitors which are arranged in the seat bottom and the capacitance value of which changes when a passenger occupies a seat - see for instance the German Offenlegungsschrift DE-36 35 644.

These seating indicators based on capacitance changes are not reliable in practice and in the long term often give erroneous readings.

The present invention provides a vehicle provided with seats for one or more occupants wherein in one or more seats is arranged a gastight bag-like member filled with medium in order to provide a seating indicator which indicates whether or not a person has occupied this seat.

Further advantages, features and details of the present invention will be elucidated on the basis of a description of a preferred embodiment of a vehicle according to the present invention with reference to the annexed drawings, in which:
fig. 1 shows a view in perspective of a first embodiment of a vehicle according to the present invention; and
fig. 2 is a partly broken away view in perspective of a second embodiment for connection of the seating indicator of fig. 1.

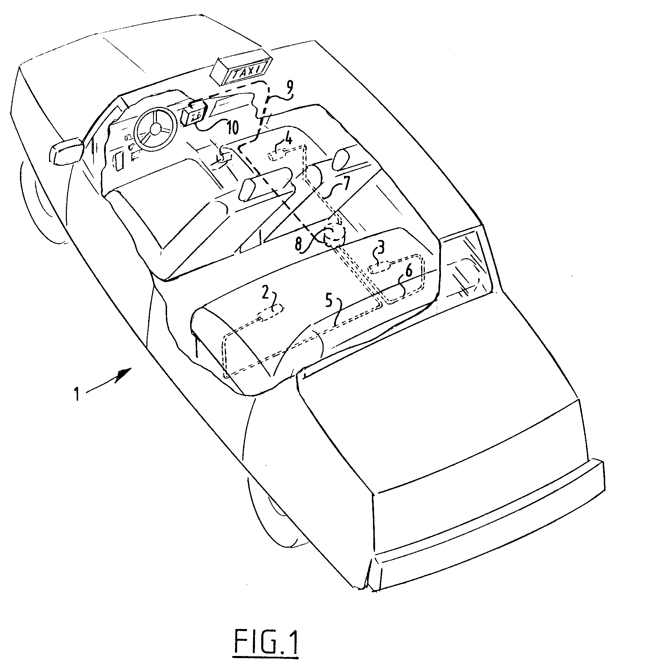

A vehicle 1 (fig. 1) for taxi transport is provided in the present embodiment with three bags or cushions 2, 3, 4 which are filled with air (or other medium) and which are connected via lines 5, 6, 7 to pressure switches disposed in a housing 8. An electric cable 9 is arranged from the housing 8 to a taxi-meter 10 so that the seats occupied by a passenger during determined journeys can be recorded in the taxi-meter 10.

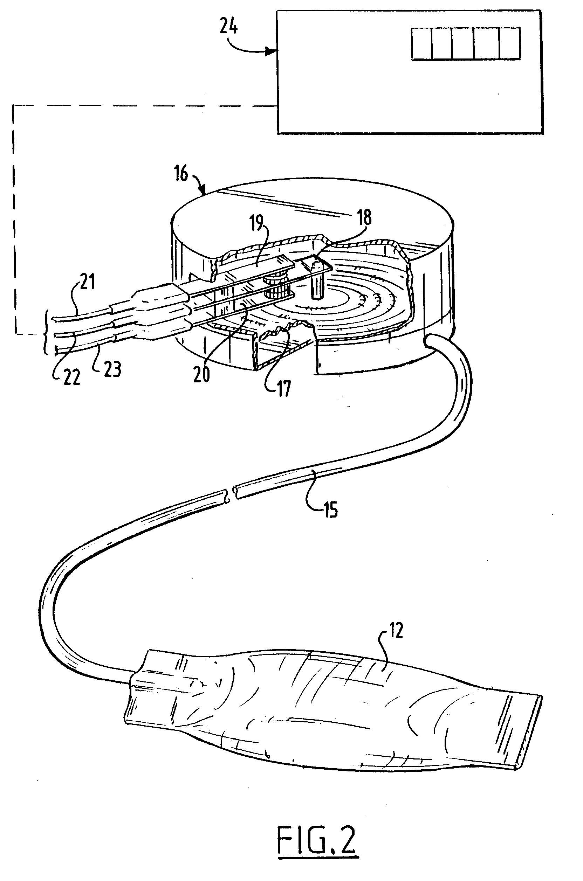

Fig. 2 shows in more detail how an airtight bag 12 is connected via a gastight line 15 to a pressure switch 16. When pressure is applied to the bag 12 and to the air located therein, this pressure is exerted via line 15 on a diaphragm 17 of the pressure switch which causes a conductor 18 to make contact with a conductor 19 or a conductor 20. The electrical signals are transferred via schematically designated cables 21, 22 and 23 to a taxi-meter 24 in which is recorded whether anyone has sat on the seat in which the bag or cushion 12 is arranged.

The type of pressure switch can be selected subject to the material of a particular seat, that is, the force required that has to be applied to the diaphragm to cause a relevant contact to close. Both for soft seating and hard seating an accurately operating combination of pressure switch and air cushion has been realized in practice.

The present invention is not limited to the embodiments shown and described. The scope is defined by the following claims. The pressure switch in particular is not limited to the embodiment thereof shown and described; integrated circuits with a connection for a pressure line are now available which are likewise particularly suitable for use in the present invention.

## Claims

1. Vehicle provided with seats for one or more occupants, wherein in one or more seats is arranged a gastight bag-like member filled with medium in order to provide a seating indicator which indicates whether or not a person has occupied this seat.

2. Vehicle as claimed in claim 1, wherein the medium in the gastight bag is air.

3. Vehicle as claimed in claim 1 or 2, provided with a recording means for recording in time whether the seats are occupied by passengers.

4. Vehicle as claimed in claim 3, wherein the recording means is a taxi-meter.

5. Vehicle as claimed in any of the foregoing claims, wherein two or more bags are connected by means of gastight lines to pressure switches arranged in a collective housing, wherein an electrical cable is arranged between the collective housing for the pressure switches and the taxi-meter.

6. Seat for a vehicle provided with a gas-tight bag-like member as seating indicator.

7. System comprising:
- a gastight bag-like member;
- an air line connected thereto; and
- a pressure switch connected to the air line.
